# EUROPEAN PATENT APPLICATION

(11) **EP 1 731 909 A1**
(43) Date of publication of application: **13.12.2006**
(21) Application number: 05727958.0
(22) Date of filing: 30.03.2005
(51) Int. Cl.: G01N 33/543

(54) **IMMOBILIZATION VEHICLE, METHOD OF TREATING VEHICLE AND CONTINUOUS VEHICLE TREATING APPARATUS**

(30) Priority: 31.03.2004 JP 2004107443
(71) Applicant: Universal Bio Research Co., Ltd., Matsudo-shi, Chiba 271-0064 (JP)
(72) Inventor: TAJIMA, Hideji, Mastudo-shi Chiba 2710064 (JP); HATANO, Tomoyuki, Mastudo-shi Chiba 2710064 (JP); XIAO, Lingzhi, Mastudo-shi Chiba 2710064 (JP); TAKAHASHI, Masaaki, Mastudo-shi Chiba 2710064 (JP)
(74) Representative: Bohnenberger, Johannes
(86) International application number: PCT/JP2005/006143
(87) International publication number: WO 2005/095966

(57) **Abstract**

The present invention provides a fixing medium suited for fixing biological substances, a medium processing method and a continuous medium processing device. The continuous medium processing device of this invention comprises:
a feeding mechanism to run a continuous medium longitudinally along a predetermined travel path;
one or more containers installed along the travel path and containing liquids which are to be brought into contact with the continuous medium;
gaps provided in each of the containers on the travel path so that the continuous medium can run through the containers; and
a liquid leakage prevention unit provided to the containers to prevent possible leakage of the liquids from the gaps.

## Description

### TECHNICAL FIELD

The present invention relates to a fixing medium, a medium processing method and a continuous medium processing device.

### BACKGROUND ART

Conventionally DNA chips have been used for DNA sequencing. The DNA chip is a semiconductor film or slide glass or other plate that has arrayed and fixed on its surface like dots small volumes of liquids containing various kinds of known oligonucleotides.

To fabricate the DNA chip requires arraying dots of various kinds of oligonucleotides at high density in a narrow area of a planar surface. The higher the density, the closer the oligonucleotide dots get to each other and the more likely a cross-contamination will become. In addition to that, at each fixing position the oligonucleotide dots become smaller in volume. Particularly, as the volume of dots of oligonucleotides become smaller, errors are more likely to occur in determining a light emitting position, giving rise to a problem in terms of accuracy. Further, the reduced volumes of dots lowers the chances of encounter with an object substance and a reactivity with it, resulting in the processing taking longer to complete.

Further, since samples are arranged on a planar surface, as the dot array density becomes higher, the handling of samples and their automation become more difficult. Thus, the manufacture of DNA chips requires lots of time and labor, making them costly. Particularly, analysis, evaluation and determination of the structure of an unknown object substance containing a huge amount of base sequences require analysis and evaluation of a large number of DNA chips.
To solve this problem, the author of this invention have filed applications (patent document 1 to 4) that disclose an integrated support body which comprises a base member formed in an elongate shape, such as one or more threads, strings, tapes or rods, and a variety of detection substances of predetermined chemical structures arrayed and fixed longitudinally on the base member, the base member being wound, stacked or arrayed so that the fixed locations of the individual detection substances are associated with their chemical structures. There are literatures (patent document 5 and 6) related to such a base member.

These integrated support bodies have an advantage of being able to easily arrange a variety of detection substances at a high overall density without having to arrange the fixing positions of the detection substances at so high density along the base member, by densely winding the base members together. Thus, the integrated support bodies may be able to be provided at low cost.

To fix various biological substances used as detection substances on a medium that forms the base member used to fabricate the integrated support body, the medium needs to be coated with a biological substance fixing material or subjected to various surface treatments.

The base member is a continuous medium with its entire surface available for use. So, unlike a DNA chip in which only one surface of its plate is used, the medium cannot be put on a support table during processing. Therefore, compared with a flat medium that can simply be placed on a table for processing, the continuous medium is difficult to handle.

If the continuous medium is to be processed uniformly, the amounts of chemicals to be fixed on the medium, the processing time or the concentrations of the chemicals need to be monitored by humans, requiring time and labor and making the device complicated.

Particularly if the continuous medium comes into contact with a mechanism for supporting the continuous medium during processing or with a processing or fixing means, the material already attached to the medium may be scraped off before being fixed there or the surface of the medium may become semi-flexible or softened during the processing, giving rise to a problem of the surface of the medium being damaged.

Under these circumstances, there has been a growing demand for a variety of mediums that are suited for fixing such biological substances and can be supplied easily and inexpensively in large amounts.

Patent document 1: WO 01/61361 A1
Patent document 2: WO 01/53831 A1
Patent document 3: WO 01/69249 A1
Patent document 4: WO 02/63300 A1
Patent document 5: WO 02/45842 A1
Patent document 6: WO 99/3341 A1

### DISCLOSURE OF THE INVENTION

### TASK TO BE ACHIEVED BY THE INVENTION

The task of this invention is to provide a fixing medium suited for fixing biological substances or to automatically perform processing on the continuous medium in one flow with high reliability.

The present invention has been accomplished to achieve the above task and it is a first object of this invention to provide a fixing medium capable of fixing biological substances such as genes and proteins reliably, efficiently and easily.

A second object of this invention is to provide a fixing medium, a medium processing method and a continuous medium processing device that can automatically fabricate a medium for fixing biological substances such as genes and proteins inexpensively in large amounts.

A third object of this invention is to provide a continuous medium processing device that can prevent a possible contact of the continuous medium with other than those liquids containing reagents for processing and also reliably prevent breaks, damages or contamination of the continuous medium being processed, thus allowing for continuous, smooth, highly reliable processing.

A fourth object of this invention is to provide a fixing medium, a continuous medium processing method and a continuous medium processing device capable of providing a uniform, high-quality medium.

### MEANS TO ACHIEVE THE TASK

A first invention is a fixing medium made of polyamide-based polymer which has functional groups capable of bonding to biological substances and porous areas.

The "polyamide-based polymer" is a compound having peptide bonds, natural or artificial. Natural peptide bonds include silk and artificial ones include nylon, all aromatic polyamides such as PPTA (poly-p-phenylene terephthal amide), and hetero ring-containing aromatic polymers. Nylon includes 3-nylon, 6-nylon, 6,6-nylon, 6,10-nylon, 7-nylon and 12-nylon.

The reason that the "polyamide-based polymer" is used is that hydrolyzing the peptide bonds forming the medium with an acidic water solution results in the functional groups used to fix the biological substances being formed or produced on the medium. That is, since the functional groups are formed or produced by the bonding between atomic groups forming the medium and water molecules, the process of attaching or fixing the material or solid having the functional groups to the medium from outside is rendered unnecessary. When physically adhering the material having the functional groups to the medium from outside, the concentration of the functional groups depends on the density of a solution containing the functional groups and the porosity of the medium. On the other hand, when forming or generating the functional groups on the medium, they are generated at high density of molecular level. The concentration of the functional groups increases as the cycle of repetitive structure of polyamide-based polymer becomes shorter. That is, of the polyamide-based polymers, 3-nylon, 6-nylon and 6,6-nylon have relatively high concentrations. The "functional groups capable of bonding to biological substances" are, for example, carboxyl group -COOH, amino group -NH₂ or its derived groups. The "biological substances" include, for example, DNAs, RNAs, mRNAs, oligonucleotides; nucleotides, proteins, antigens, antibodies and sugar chains.

The "medium" is a solid, the shape of which, though not limited in particular, may be a continuous medium, particlelike medium or platelike medium described later.

The "porous area" refers to an area of the medium where there are a large number of pores. The porous area may exist only on the surface portion of the medium or in the whole of the medium. The "pores" may be penetrating pores or non-penetrating pores. The presence of the porous area and of the functional groups enables biological substances or living bodies such as cells, bacteria and viruses to be physically or chemically bonded. That is, the medium can fix a variety of substances thereto.

The "surface portion" refers to a surface and a layer portion having a predetermined depth from the surface. The thickness of the layer portion depends on the size of the entire medium. The thickness of the surface portion is approximately 10% to 50% of the entire thickness. When the medium diameter is 100µm, for example, the thickness of the layer portion is about 10µm. Thus, the medium with the surface portion has a core portion not made porous. This gives the medium a stiffness. The core portion is required to keep the strength of the medium when the medium is formed slender as with a continuous medium described later or when it is attached with medium particles.

According to the first invention, since the medium of polyamide-based polymer has functional groups and a porous area, it can not only enhance the efficiency of fixing the substances and living bodies by chemical or physical adsorption but also fix a wide variety of substances by the porous portion. Further, since the peptide bonds forming the medium are hydrolyzed to form or generate on the medium functional groups for fixing the biological substances, the process of fixing the substances or solids having the functional groups from outside becomes unnecessary, making the medium fabrication easy. Further, since the peptide bonds forming the medium are hydrolyzed to form or generate on the medium the functional groups by using atom groups forming the medium that contribute to the peptide bonds of the medium, the functional groups can be generated on the medium at a high density. Further, when adhering substances or solids having the functional groups to the medium, since the work to adjust their density and the porosity of the medium is not required, the processing becomes simple. It is therefore possible to fix biological substances firmly at high density.
When the pore-making processing is executed on only the surface portion of the medium, the medium can be given some stiffness. The medium can therefore be subjected to continuous processing whereby the continuous medium is applied a tension in the longitudinal direction and driven to travel.
Further, the medium of polyamide-based polymer can be rendered porous by processing it with an acidic water solution and then solidified to fabricate a fixing medium. The fixing medium therefore can be manufactured easily and inexpensively in large amounts.

A second invention is a fixing medium having a plurality of medium particles adhering to the body medium.

Since the medium not only has a porous region but also has medium particles attached thereto, the surface of the medium is expanded. It is preferred that the diameter of the medium particles be set sufficiently smaller than the length, width or thickness of the medium. When the medium particles are made smaller than the diameter of pores, the medium particles also adhere to each pore. The medium particles adhere irregularly and randomly to the body medium or its surface portion. For a continuous medium 100 µm in diameter, for example, the diameter of pores is a few micrometers or less.

The body medium and the medium particles adhering to the body medium may be formed of the same material or of different materials. If their materials differ but are polyamide-based polymer and can be made porous by a common reagent, the medium particles can also be made porous as when the same material is used.

According to the second invention, the surface area of the porous medium is expanded by adhering a plurality of medium particles to the porous body medium. Further, if the medium particles are already porous, the second invention further increases the surface area. Since the medium particles can be formed by suspending them in a solution, they can be manufactured easily and inexpensively. Whether the medium particles and the body medium area made of the same material or different materials, if they are polyamide-based polymer, the medium particles can also be made porous. Also, if the medium particles are already made porous, the surface area of the continuous medium can further be expanded.

A third invention is a fixing medium to which one or more kinds of biological substances are fixed.

The biological substances may have known or unknown chemical structures. By labeling object or target biological substances and bonding them to the fixed biological substances on the medium, the chemical structures of the object biological substances can be determined or the chemical structures of the biological substances fixed on the medium determined. Particularly, if the positions on the medium of the fixed biological substances are predetermined, the chemical structures of the object biological substances or of the biological substances on the medium can be determined by locating the positions on the medium of the labeled object biological substances. Here, the "chemical structure" includes chemical expressions, base sequences or amino acid sequences.

According to the third invention, by fixing one or more kinds of biological substances to the medium and checking for the bonding between the fixed biological substances and the labeled object biological substances to determine the presence or absence of the labeled substances, or by checking the predetermined fixed positions on the medium, it is possible to determine the chemical structures of the biological substances fixed on the medium or the object biological substances.

A fourth invention is a medium processing method which comprises a reaction step of dissolving the medium of polyamide-based polymer to a half-liquefied state and hydrolyzing peptide bonds, a pore-making step of rendering the medium porous, and a solidifying step of solidifying the porous medium.

In the reaction step, the dissolving of the medium to the half-liquefied state is achieved by bringing the medium into contact with a predetermined solvent and the hydrolyzing of peptide bonds is accomplished by brining them into contact with an acidic water solution. The pore-making step is performed by bringing the medium into contact with a predetermined organic solvent. The solidifying step is done by bringing the porous medium into contact with a solidifying agent.

The solvent used to "dissolve the medium" made of nylon, such as 3-nylon, 6-nylon, 6,6-nylon, 6,10-nylon, 7-nylon and 12-nylon, preferably includes, for example, water solutions of hydrochloric acid and formic acid. Other solvents, such as water solutions of sulfuric acid and nitric acid may be used. For PPTA, concentrated sulfuric acid is used; and for hetero ring-containing aromatic polymers, methanesulfonic acid and polyphosphoric acid are used. Formic acid provides a fast dissolution rate for at least 3-nylon, 6-nylon, 6,6-nylon, 6,10-nylon, 7-nylon and 12-nylon of the polyamide-based polymer. The concentration of a reagent used is determined according to the size of the medium to be dissolved. For hydrolyzing peptide bonds, acidic water solutions of strong acids, such as hydrochloric acid, sulfuric acid and nitric acid, are preferably used. Therefore, for at least 3-nylon, 6-nylon, 6,6-nylon, 6,10-nylon, 7-nylon and 12-nylon, formic acid with a high dissolution rate and hydrochloric acid with a high hydrolyzing performance are mixed at a predetermined ratio. This solution assures quick, effective dissolution and hydrolyzing of these materials.

The "predetermined organic solvent" is an organic solvent that can dissolve both the solidifying agent and solute. When, for example, water and acetone are used as the solidifying agent, preferred solvents include hydrophilic solvents, such as saturated monovalent alcohols including ethanol, isopropanol and methanol, and polar solvents. Selecting from among organic solvents of different molecular weights, as described above, makes it possible to choose an appropriate replacement rate. The organic solvent is brought into contact with a medium whose surface portion has been hydrolyzed so as to remove those oligomers hydrolyzed and cut off from the surface portion of the medium by taking advantage of a concentration gradient, thus replacing the oligomers with the hydrophilic solvent introduced to the surface portion to render the surface portion porous.

The "semi-liquefied state" refers to a state intermediate between a state in which a solid is in the process of being dissolved into liquid and a liquid state. This is also referred to as a half-flexible state.

The "hydrolyzing of peptide bonds" refers to a process of reacting a predetermined structure, -R-CONH-R'-, linked by peptide bonds forming polyamide-based polymers, with acid in water to break it down to component structures, -R-COOH and -R'-NH₂.

The "solidifying agent" that may be used in this process includes, for example, distilled water, acetone and hexane.

Simultaneously with or following the solidifying step, a pH adjust step of adjusting pH of the solution or a cleaning step of removing impurities such as oligomers produced by the cutting of peptide bonds during processing may be performed to ensure a smooth execution of the subsequent process of fixing biological substances to the medium. The "adjustment of pH" can facilitate the fixing of genetic substances by bringing the medium into contact with a neutralizer to remove acidity or adding a buffer to make it weakly alkaline.

In the reaction step, the dissolution and the hydrolyzing of the medium are executed on the surface portion or the entire medium. When the processing is performed on the surface portion, the medium has a core that remains nonporous. The presence of the core gives the medium some stiffness.

The fourth invention produces the similar effects to those explained in the first invention.

A fifth invention is a medium processing method which in the reaction step hydrolyzes the medium after it has been dissolved to a half-liquefied state.

For this purpose, after the medium is brought into contact with a water solution of formic acid with a high dissolving rate but with a small hydrolyzing performance to dissolve it to the half-liquefied state, the medium may be brought into contact with a water solution of hydrochloric acid with a normal dissolution performance and a high hydrolyzing performance. By performing the hydrolyzing step after quickly dissolving the medium to the half-liquefied state, the hydrolyzing reagent can penetrate not only through the surface portion of the medium but also into the half-liquefied portion, realizing the hydrolyzation at a higher efficiency.

According to the fifth invention, since the medium is first dissolved to the half-liquefied state before being hydrolyzed, the hydrolyzation of the half-liquefied medium can be facilitated. Further, since the medium is brought into contact with a reagent suited for medium dissolution and a reagent suited for medium hydrolyzation independently of each other, the hydrolyzation can be quickly and efficiently executed after the medium is quickly dissolved.

A sixth invention is a medium processing method in which the reaction step has a step of suspending a large number of medium particles in a solution.

Because the surface portion of the medium to be processed is already in the half-liquefied state, medium particles can be easily attached to the medium. The material of the medium particles may be the same as or different from that of the medium to be processed. If the hydrolyzation and the pore-making can be executed with the same reagent, not only can the medium particles easily adhere to the medium being processed but they can also be rendered porous.

According to the sixth invention, the effects similar to those explained in the second invention can be produced.

A seventh invention is a medium processing method in which, when the polyamide-based polymer is nylon, the reaction step is executed by bringing the medium into contact with hydrochloric acid and/or formic acid.

According to the seventh invention, when the polyamide-based polymer is nylon, the dissolution and the hydrolyzation can be performed efficiently and easily by using hydrochloric acid or formic acid.

An eighth invention is a continuous medium processing device that comprises: a feeding mechanism to run a continuous medium longitudinally along a predetermined travel path; one or more containers installed along the travel path and containing liquids which are to be brought into contact with the continuous medium successively; gaps provided in wall portions of each of the containers on the travel path so that the continuous medium can run through the containers; and a liquid leakage prevention unit provided to the containers to prevent possible leakage of the liquids from the gaps.

Here, the "continuous medium" refers to an elongate medium that can suitably be processed continuously, including, for example, one-dimensional mediums such as strings and threads and tapelike mediums. The word "one-dimensional medium" refers to a medium whose position can be determined only by a coordinate in the longitudinal direction (distance from a predetermined origin) or in which it is adequate or advantageous to employ such a position determination. Although there is no limitation on the size and length, the medium may range from a few meters to a few hundred meters so that it can be wound on a bobbin. The width or thickness of the medium perpendicular to its longitudinal direction may be a few micrometers to a few centimeters.

The continuous medium may be formed of, for example, synthetic fibers such as nylon threads, natural fibers such as silk threads, organic materials including polymeric synthetic resins such as cellulose, rubber and plastics, and inorganic materials such as metals, semiconductors, half-metals, amorphous metals and glass fibers.

In feeding the continuous medium, the continuous medium is applied a tension and kept in a tensed state to prevent a possible slack while the continuous medium is fed and thereby prevent it from coming into contact with other members than the intended liquid. The "feeding" is preferably done at a constant speed. The speed is determined according to the content of processing being executed and the size of containers. Consider, for example, a case where the continuous medium is subjected to the pore-making processing. If the amount of reagent is several tens of milliliters to several thousand milliliters and the width of containers ranges from several tens of millimeters to several hundred millimeters, the feeding speed may be set at several mm/second.

The "liquid to be brought into contact with the continuous medium" includes, for example, a reagent liquid that is used to process the continuous medium to fix biological substances to the continuous medium, a liquid containing biological substances to be fixed to the continuous medium, or a reagent liquid used to process the continuous medium to which the biological substances have been fixed.

The "processing of the continuous medium" refers to forming microscopic pores or undulations in the continuous medium or in its surface portion. The liquids used for this purpose include water solutions of hydrochloric acid or formic acid and solutions of chemicals such as organic solvents including ethanol, isopropanol and methanol. Solutions containing cleaning agents or neutralizing agents to remove the above solutions of chemicals from the processed continuous medium may also be used. The surface-treated continuous medium, after being cleansed, is preferably dried.

The "substances to be fixed" include biological substances, such as DNAs, RNAs, oligonucleotides, nucleotides, proteins, antigens, antibodies, sugar chains and cells, and substances to fix these biological substances, such as functional groups including a carboxyl group -COOH, an amino group -NH₂ or its derived group. To fix these substances after they are coated on the medium, the surface of the coated continuous medium is applied ultraviolet rays.

The "reagents to process the continuous medium to which the substances have been fixed" activate the carboxyl group (-COOH) or its derived group present on the surface of the continuous medium in the process of reacting the carboxyl group or its derived group with amino groups of the nucleic acids. Examples of such activating reagents include a watersoluble dehydration condensing agent of carbodiimides, such as EDAC (1-ethyl-3-(3-dimethylaminopropyl)-carbodiimide), hydroxiimides and chlorides.

The "containers" accommodate liquids containing the above-described chemicals and may be shaped like a bottle, flask, beaker, tube, flow path, reservoir or tank. To seal off an atmospheric pressure and prevent evaporation of liquids, it is appropriate to hermetically close openings in the containers except for the gaps with a cover that corresponds to the cover unit. It is also possible to install pipes through the cover to supply and discharge liquids to and from the containers. The containers may have a volume of several liters to several tens of liters. When two or more containers are provided, one may accommodate a liquid containing a surface-treating chemical, another may accommodate a cleansing liquid to remove the chemical and impurities such as oligomers or a neutralizer for neutralizing acidity to adjust the medium to a state required for fixing biological substances, and another may accommodate a solidifying agent to solidify the processed continuous medium.

The "travel path" is one on which the continuous medium runs in its longitudinal direction. Normally, it is a straight line path.

The "gaps" are provided in the walls of the containers so that the continuous medium can travel through the containers. The size and shape of the gaps are determined by the size and shape of the cross section of the continuous medium passing through the gaps and by the positions of the gaps so as to prevent a possible leakage of the liquids from the gaps and prevent the continuous medium from contacting the walls. As for the number of gaps, each container is normally provided with two gaps. If the gaps have a slightly larger width than that of the continuous medium and the two holes formed in the walls of the container are connected by a slit, the gaps may be counted as one. The reason that the continuous medium is set so as not to contact the containers is to avoid a possible break of the continuous medium that would be caused by the contact during the surface treatment when the surface portion of the continuous medium is softened. The gaps may be formed in the shape of a closed hole such as a circular hole, a slitlike opening that opens upward in the container, or two holes on the travel path connected by a slit described above. In the upwardly opening slit or two holes connected by a slit, the continuous medium can easily be set in the gaps. The continuous medium is 10 µm to a few mm in diameter and, for such a medium, the gaps may have a diameter, thickness or width of several mm to several cm.

The "liquid leakage prevention unit to prevent a liquid leakage from gaps" refers to a cover unit covering openings in an upper side of the container except the gaps, a pressure means such as a pump to apply a negative pressure to the interior of each container, or a vessel and pump mechanism to collect a leaking liquid and return the liquid to the container. The magnitude of the negative pressure is determined based mainly on the amount of liquid accommodated in the container, the size and height of the gaps, a specific gravity of the liquid to be accommodated and the pressure of the liquid at a particular position.

The feeding mechanism feeds the continuous medium by rotating a supply reel or roller and a takeup reel or roller around which the continuous medium is wound. A tension control roller may be provided at a predetermined position along the travel path to adjust the tension in the longitudinal direction of the continuous medium.

The eighth invention offers an advantage that simply feeding the continuous medium along the travel path can cause the medium to pass through liquids in the liquid processing units in the order that the liquid processing units are arranged on the travel path and can bring the continuous medium into contact with the liquids successively to automatically execute processing without requiring a human intervention.
Another advantage is that, with the liquids required for processing the continuous medium accommodated in the respective containers in advance and with the continuous medium driven to run along the travel path, multiple works -- a work to carry the continuous medium to the position of the target liquid, a work to bring the continuous medium into contact with the liquid and a work to take up the processed continuous medium out of the liquid and transport it -- can be parallelly performed without being separated from one another, allowing the processing to be executed continuously in one flow. Therefore, with this invention, since the continuous medium can be manufactured efficiently and quickly, it can be supplied at low cost and in large amounts.
Further, since, during the liquid contact processing, the continuous medium is kept out of contact with other than the target liquid, such as device portions including containers and gap portions, a possible break, damage and contamination of the medium that has been softened during the processing can be reliably prevented. This in turn offers an advantage of being able to provide a highly reliable continuous medium processing device and method.
When it begins to be fed or at the end of the processing, the continuous medium is wound on a core or reel. If the continuous medium is kept dry, possible break and damage of the medium at the final stage of processing can be avoided.
Further, by using a continuous medium long in the longitudinal direction, the processing can be continued for a long period of time, which in turn allows the processing of continuous medium to be executed at low cost and in large amounts.

A ninth invention is a continuous medium processing device in which the liquid leakage prevention unit has a cover unit that covers openings in the container except for the gaps.

According to the ninth invention, the cover unit that covers the main openings in the container seals off the atmospheric pressure to produce a negative pressure without providing a pressure adjust mechanism. The continuous medium processing device can easily be realized with a simple construction without consuming energy.

A tenth invention is a continuous medium processing device in which the liquid leakage prevention unit has a pressure means to set the interior of each of the containers to a negative pressure.

According to the tenth invention, with the pressure in the container set to a negative pressure, a liquid leakage can be prevented reliably even from a relatively large gap.

An eleventh invention is a continuous medium processing device in which the liquid leakage prevention unit has a vessel outside the container to receive a liquid that has leaked out of the container and a pump mechanism to return the liquid collected in the vessel to the container. With this construction, if the volume of liquid that has leaked from the gaps is large, the leakage from the container can be prevented effectively.

With the eleventh invention, by returning the liquid, that has leaked out of the container and is collected in the vessel, to the container, it is possible to prevent a leakage of the liquid more reliably even if the gaps are relatively large.

A twelfth invention is a continuous medium processing device in which the internal length of the container along the travel path, the distance between the gaps in the container and/or the travel speed are determined according to the content of processing.

If the travel speed is set constant, as the internal length of the container along the travel path or the distance between the gaps increases, the time that the continuous medium remains in contact with the liquid also increases. That is, the length or travel speed matches the volume of liquid required per unit length of the continuous medium. Therefore, the length increases with the volume of liquid required per unit length. Further, the travel speed decreases as the volume of liquid required per unit length of the continuous medium increases. The travel speed preferably is variable according to the content of processing.
The "content of processing" includes an object of the processing, processing steps, a material of the continuous medium to be processed, and a kind, concentration, quantity and temperature of a solution or reagent to be accommodated in each container for use in the processing.

According to the twelfth invention, the length along the travel path of the container or the distance between the gaps and/or the travel speed are determined according to the content of processing including the kind of liquid accommodated in each of the container. Thus, since the continuous medium can be run at a constant speed without changing the medium travel speed in each container, the invention can offer an advantage of being able to process the continuous medium reliably and efficiently with a simple control.

A thirteenth invention is a continuous medium processing device in which a liquid maintenance unit to maintain the quality and/or volume of the liquid accommodated in the container is provided in each container. The "maintenance of the quality and/or volume" of the liquid means making the liquid homogeneous, maintaining the liquid so as to prevent it from deteriorating, keeping the liquid volume constant, optimizing the temperature and pressure of the liquid, and removing impurities from the liquid.

Here, the "making the liquid homogeneous" refers, for example, to keeping the concentration and temperature of the liquid spatially constant by eliminating or minimizing spatial variations and differences. Preventing variations in the reaction between the surface of the continuous medium and the liquid allows for a homogeneous, high-quality surface treatment and the fixing of predetermined substances.

The "keeping the volume constant" is done, for example, by measuring the mass and volume of the liquid and, when they decrease, additionally supplying the liquid.

Here, the "liquid maintenance unit" includes a circulation unit that circulates the liquid in the container through a pipe provided outside the container which has its inlet and outlet inside the container.

In this case, the "circulation unit" may be arranged such that its inlet is connected to the lower side of each container and outlet to the upper side, or its outlet is connected to the lower side and inlet to the upper side to circulate the liquid. This arrangement can eliminate vertical variations or differences in liquid concentration and temperature and therefore make the solution, liquid mixture and suspension homogeneous. The liquid circulation may be accomplished, for example, by providing a circulation pump in the piping.

The pipe is connected to a liquid-storing tank outside the container and a flow-variable pump is installed upstream and downstream of the tank. This arrangement makes it possible to control the liquid circulation through the pipe outside the container so that a certain volume of liquid remains in the container at all times.

This eliminates variations in the liquid concentration and temperature in each container and keeps the liquid volume in the container constant, eliminating liquid volume variations over time. Therefore, a homogeneous, highly reliable continuous medium can be manufactured. Particularly, by circulating the liquid in the container in the vertical direction, vertical concentration variations can be eliminated, allowing a liquid with a more homogeneous concentration to be used for processing.

The liquid maintenance unit includes an agitator unit for stirring the liquid in the container. The agitator eliminates spatial deviations in concentration and temperature of the liquid in the container and makes the liquid concentration and temperature in the container uniform.

The "agitator unit" preferably comprises: a permanent magnet coated with resin and installed rotatable as a blade in each of the containers; and an agitator having a magnet (a permanent magnet or electromagnet) installed outside each container to rotatably drive the blade. Since the only portion in the agitator unit that comes in contact with the liquid in the container is limited to the blade, a possible contamination can be prevented, allowing for a highly reliable continuous medium processing. This construction offers an advantage that by stirring the liquid in the container, horizontal variations in concentration and temperature can be eliminated.

According to the thirteenth invention, processing the liquid in a manner that maintains the quality and/or volume of the liquid in each of the containers can provide a homogeneous, highly reliable continuous medium.

A fourteenth invention is a continuous medium processing device that has a liquid modification unit to change the quality and/or volume of the liquid in each container.

The "liquid quality and/or volume modification processing" means changing the quality and/or volume of the liquid, for example, by replacing the liquid with a different kind of liquid, changing the liquid concentration, adding a predetermined substance to the liquid, increasing or reducing the volume of the liquid, or changing the quality of the liquid by external influences (temperature, pressure, electromagnetic waves, magnetic forces, etc.), supplying a liquid or substance to be accommodated in the container and discharging it. An example of such a liquid modification unit is a supply and discharge unit that supplies a liquid or substance to be accommodated in the container and discharges it or which replaces it with a new liquid or substance. This supply and discharge unit may, for example, have a pipe connected to the container, a supply tank connected to the pipe to accommodate a liquid or substance to be supplied to the container or a discharge tank to accommodate the liquid discharged from the container, and a pump to supply or discharge the liquid.

The container may be provided with a heating unit to heat the liquid accommodated in the container and/or a cooling unit to cool it.

The "heating unit" may be an electric heater, and the "cooling unit" may be a combination of fins provided to the outer walls of the container and a fan to deliver air to the fins, or a combination of a passage provided to the outer walls of the container and a refrigerating mechanism to supply a coolant through the passage. Alternatively, the "heating unit" and "cooling unit" may be arranged to be selectable by controlling the direction of current by using a Peltier device. The heating unit and the cooling unit can also be used as the liquid maintenance unit or the liquid modification unit. Since the provision of the heating unit or cooling unit to the container allows for an execution of processing at an optimal temperature, a highly reliable processing is assured.

According to the fourteenth invention, the liquid modification offers an advantage of being able to utilize the container efficiently and perform a variety of processing. Particularly, by providing a liquid supply and discharge unit to the container for the liquid modification, it is possible to supply a liquid required in the processing or replace the liquid with a new liquid for efficient use of the container. In addition, a variety of processing may be added. For example, the continuous medium may be provided with a characteristic that has a gradient or varies according to a distance.

A fifteenth invention is a continuous medium processing device having a position fine adjustment means to finely adjust the vertical or horizontal position of the container so that the gaps in the walls of the container are situated on the travel path to allow the continuous medium to travel through the gaps.

Further, it is preferred that the peripheral portions of the gaps be formed of a light transmitting member. The gaps may be provided at the free end of raised portions protruding from the side surface of the container and the raised portions may be formed of a light transmitting member. This arrangement makes it possible to easily check, by sight, for not only a contact between the continuous medium and the gaps but also for a contact between the continuous medium and the surrounding portion of the gaps. As a result, any deviation between the continuous medium and the travel path can easily be detected and the contact between the container and the continuous medium avoided.

According to the fifteenth invention, the vertical position or horizontal position of each of the containers can be finely adjusted. This enables the travel path to pass through the gaps of each container reliably, offering an advantage of being able to prevent a possible contact of the continuous medium with the gaps and therefore damages and breaks of the continuous medium and realize stable processing.

A sixteenth invention is a continuous medium processing device which has in the container a pressure sensor to measure a pressure in the container and/or a temperature sensor to measure a temperature in the container and a control unit to control the liquid maintenance unit, the liquid modification unit, the pressure means, the heating unit, the cooling unit or the feeding mechanism based on the measurements.

When the temperature measured by the temperature sensor is higher than a reference value, the reaction proceeds faster than when the temperature is at the reference value. So, the travel speed is increased by the feeding mechanism to shorten the time that the medium stays in the container so as to produce the same effect. Or simply the heating unit is controlled to return the temperature to the reference value. The pressure means is controlled by the pressure sensor to keep the pressure constant at all times. Alternatively, the pressure may be finely adjusted to match a reduction in the liquid volume over a processing time being measured, in order to prevent a liquid leakage from the gaps.

It is preferred that a medium supply unit to supply the continuous medium be installed on the travel path. The continuous medium may be supplied by feeding it along the travel path from a supply reel on which a 10-km continuous medium is wound. When the continuous medium is fed along the travel path for the first time, the following steps need to be taken. The steps involve attaching a long wire to the front end of the medium, passing it through the gaps of each container, removing it from the medium, attaching the front end of the continuous medium to the takeup reel of the feeding mechanism, paying out the continuous medium from the supply reel as the medium runs through the containers and, as a final step, winding up the continuous medium on the takeup reel. The provision of the medium supply unit on the travel path offers an advantage that the entire processing beginning with the supply of the continuous medium until completion of the processing can be executed continuously in one flow.

According to the sixteenth invention, there are advantages that the temperature monitoring allows the processing to be executed at an optimal temperature at all times, that the pressure can be changed according to a reduction in liquid volume in each container as the processing on the continuous medium proceeds, and that the monitoring can prevent liquid leakage from the gaps by adopting a minimal pressure difference.

A seventeenth invention is a continuous medium processing device in which a drying unit to dry the continuous medium is installed on the travel path.

The drying operation is performed, for example, by blowing hot air against the continuous medium or radiating infrared rays or far-infrared rays against the medium. The continuous medium that has been processed as it passes through the container is dried before being wound up on the reel.

According to the seventeenth invention, drying the continuous medium after it has been processed as it passes through the container can restore the softened medium to its original state, prevent possible breaks and damages of the medium and at the same time stop the reaction with the residual reagent solution.

An eighteenth invention is a continuous medium processing device in which an activation unit is provided on the travel path to activate the surface of the continuous medium by radiating electromagnetic waves including ultraviolet rays against the continuous medium.

The "activation" refers to make a particular function of a substance active. An example of this activation include electrons or molecules that absorb an energy of light and become excited to a higher energy level where chemical reactions easily occur. Another example is a reaction involving enzymes and catalysts in which molecules of a reactive substance combines with the surface of enzyme or catalyst, having significant influences on the electron state of the molecules so that the reaction can easily occur, or in which the surface state of the substance is changed by catalyst or a trace mount of other substance is added to enhance the action of the substance significantly. Here, the activation is realized by applying light. The activation can also be accomplished by using a reagent, as described earlier. For example, when reacting a carboxyl group (-COOH) or its derived group present on the surface of the continuous medium with an amino group of a nucleic acid, the carboxyl group or its derived group is activated. For activation, a water-soluble dehydration condensing agent of carbodiimides, such as EDAC (1-ethyl-3-(3-dimethylaminopropyl)-carbodiimide), hydroxiimides and chlorides may be used. The continuous medium is held in the solution EDAC for five minutes to activate the carboxyl group or its derived group. Then, water or buffer (e.g., sodium bicarbonate buffer (pH8.4)) is added and the medium is processed for about 15 minutes to react the activated carboxyl group with the amino group of nucleic acid to be fixed. Then, a PBS buffer containing 1% casein is added to block the remaining activated carboxyl group.

According to the eighteenth invention, the application of electromagnetic waves including ultraviolet rays can activate the surface of the continuous medium to accelerate the bonding between its surface and DNA, RNA and protein, making it possible to bond and fix a variety of substances to the continuous medium.

A nineteenth invention is a continuous medium processing method comprising: a liquid supply step of supplying liquids, that are to be brought into contact with a continuous medium, to one or more containers provided along a travel path, along which the continuous medium can be run longitudinally; a liquid leakage prevention step of preventing a liquid leakage from gaps in wall portions of each of the containers installed along the travel path; and a feeding step of causing the continuous medium to run through the gaps in the containers along the travel path.

According to the nineteenth invention, the similar effects to those explained in the eighth invention can be produced.

A twentieth invention is a continuous medium processing method in which the liquid leakage prevention step prevents a liquid leakage by covering openings in the containers except for the gaps.

According to the twentieth invention, the similar effects to those explained in the ninth invention can be produced.

A twenty-first invention is a continuous medium processing method in which the liquid leakage prevention step prevents a liquid leakage by setting the interior of each of the containers to a negative pressure.

According to the twenty-first invention, the effect similar to that explained in the 10th aspect of the invention can be produced.

A twenty-second invention is a continuous medium processing method in which the liquid leakage prevention step prevents a liquid leakage by returning to the containers the liquid collected in a vessel provided outside and accommodating each of the containers.

According to the twenty-second invention, the effects similar to those explained in the eleventh invention can be produced.

### BRIEF DESCRIPTION OF THE DRAWINGS

[Fig. 1] A block diagram showing an outline of the continuous medium processing device according to an embodiment of this invention.
[Fig. 2] Enlarged views of the continuous medium according to the embodiment of this invention before being processed, (a) being a surface view and (b) a cross-sectional view perpendicular to the longitudinal direction of the continuous medium.
[Fig. 3] Enlarged views of the fixing medium according to the embodiment of this invention after being processed, (a) being a surface view and (b) a cross-sectional view perpendicular to the longitudinal direction of the continuous medium.
[Fig. 4] Enlarged views of the fixing medium according to the embodiment of this invention after being processed, (a) being a surface view and (b) a cross-sectional view perpendicular to the longitudinal direction of the continuous medium.
[Fig. 5] A side cross-sectional view of a liquid processing unit of the continuous medium processing device according to the embodiment of this invention.
[Fig. 6] A front cross-sectional view of the liquid processing unit of the continuous medium processing device according to the embodiment of this invention.
[Fig. 7] A perspective view of the liquid processing unit of the continuous medium processing device according to the embodiment of this invention.
[Fig. 8] An enlarged view of the fixing medium according to the embodiment of this invention.

### BEST MODE FOR IMPLEMENTING THE INVENTION

As described above, a fixing medium suited for fixing biological substances and a medium processing method are provided. Also steady, efficient, quick and reliable processing without a continuous medium coming into contact with other than an intended processing liquid is realized by arranging liquid containers along a travel path on which the continuous medium runs, putting various kinds of liquids used to process the continuous medium in the containers in the order of processing along the travel path, providing at a position where the travel path crosses a wall of each container an air gap to prevent the continuous medium from contacting the travel path, and running the continuous medium at a constant speed through each container.

Now, a continuous medium processing device and method according to an embodiment of this invention will be explained with reference to the accompanying drawings. The descriptions of the embodiment should not be construed as limiting the present invention unless otherwise specifically noted.

### EMBODIMENT 1

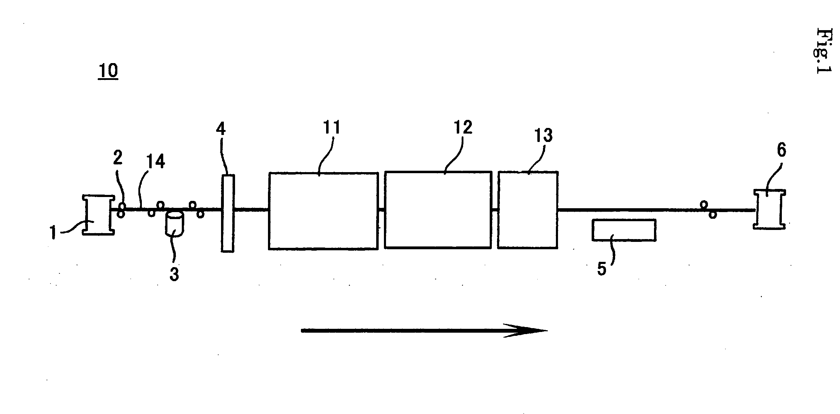

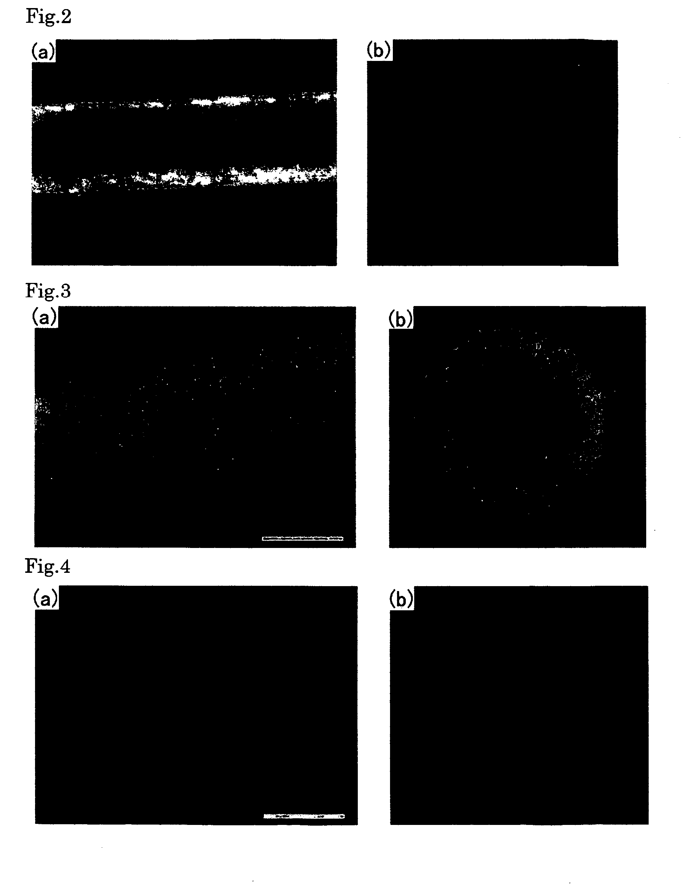

Fig. 1 is a block diagram showing an outline of the continuous medium processing device 10 according to this invention.
The continuous medium processing device 10 performs processing on a continuous medium 14, e.g., forming a porous layer on the surface of the continuous medium, as it runs in the direction of arrow. Here, as the continuous medium 14 before processing, a 6-nylon thread (Unitika, product name: 0.5/C-TM12) 116µm in diameter as shown in Fig. 2 is used.

The continuous medium processing device 10 has a bobbin 1 on which the unprocessed continuous medium 14 is wound, a plurality of rollers 2 to cause the continuous medium 14 to run along the travel path, a tension control roller 3 to control a tension of the continuous medium 14, four liquid processing units 4, 11, 12, 13 each accommodating a container containing a different reagent, a drying unit 5 to dry the continuous medium 14 by an infrared lamp, and a bobbin 6 driven to rotate by a motor not shown to wind up the processed continuous medium 14 to cause it to run along the travel path. The bobbin 6 can be driven at a variable speed, for example, in a range from several hundred µm/second to several cm/second according to the size of the container and the content of processing.

The liquid processing unit 4 has a container accommodating a liquid mixture of hydrochloric acid with a density of 5N and ethanol; the liquid processing unit 11 has a container containing 45% ethanol; the liquid processing unit 12 has a container accommodating 0.5M tris-HCl; and the liquid processing unit 13 has a container containing distilled water. The width of each container is set according to a time of contact with the reagent (processing time). The widths of the blocks representing the liquid processing units 4, 11, 12, 13 are shown to be proportional to the contact time. The lengths of the containers L1, L1, L2, L3 are, for example, 10 mm, 400 mm, 400 mm and 200 mm and the travel speed is set at several mm/second according to the content of processing. The continuous medium 14 processed in this manner is shown in Fig. 3. Fig. 4 shows the continuous medium 14 using a colorant to clearly show the porous layer.

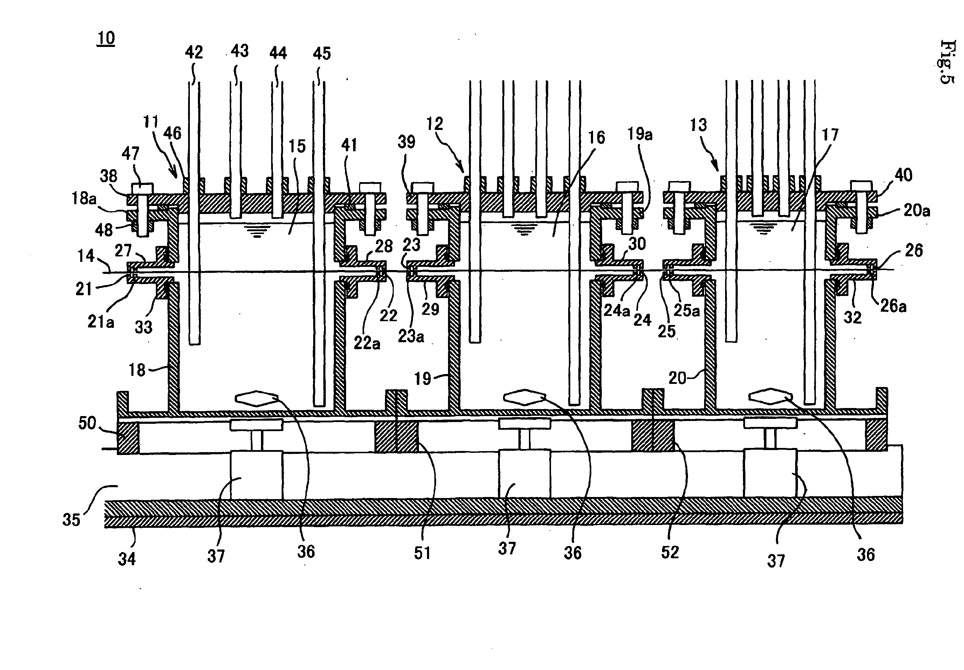

Next, representative liquid processing units 11, 12, 13 (liquid processing unit 4 is similar except for the container width and thus is omitted) will be described in detail by referring to Figs. 5, 6 and 7.
Fig. 5 is a cross-sectional view of the continuous medium processing device 10 of this invention taken along the direction of travel of the threadlike continuous medium 14.

In the continuous medium processing device 10, a plurality (in this example, three) of liquid processing units 11, 12, 13 are shown to be arranged in series along the travel direction of the continuous medium 14. The liquid processing units 11, 12, 13 are provided such that the continuous medium 14 to be processed can run through the liquid processing units 11, 12, 13 at a predetermined speed along the predetermined travel path. In Fig. 5, the continuous medium 14 is assumed to be driven from left to right, and three reagent liquids 15, 16, 17 required to process the continuous medium 14 are accommodated in square cylinderlike containers 18, 19, 20 that are installed in the liquid processing units 11, 12, 13 in the order of liquid application to the continuous medium 14, i.e., from the left side toward the right in the figure.

Along the travel path of the continuous medium 14, each of the containers 18, 19, 20 is provided with two holes 21, 22, 23, 24, 25, 26 as the air gap. These holes 21-26 are sized sufficiently larger than the diameter of the continuous medium 14 so that the holes will not contact the continuous medium 14 as it travels. This prevents the continuous medium 14 that may soften during the processing from being damaged or cut by coming into contact with the holes 21-26. For example, the continuous medium 14 is 10µm to a few mm in size and the holes 21-26 is about several mm, which is larger than the medium diameter.

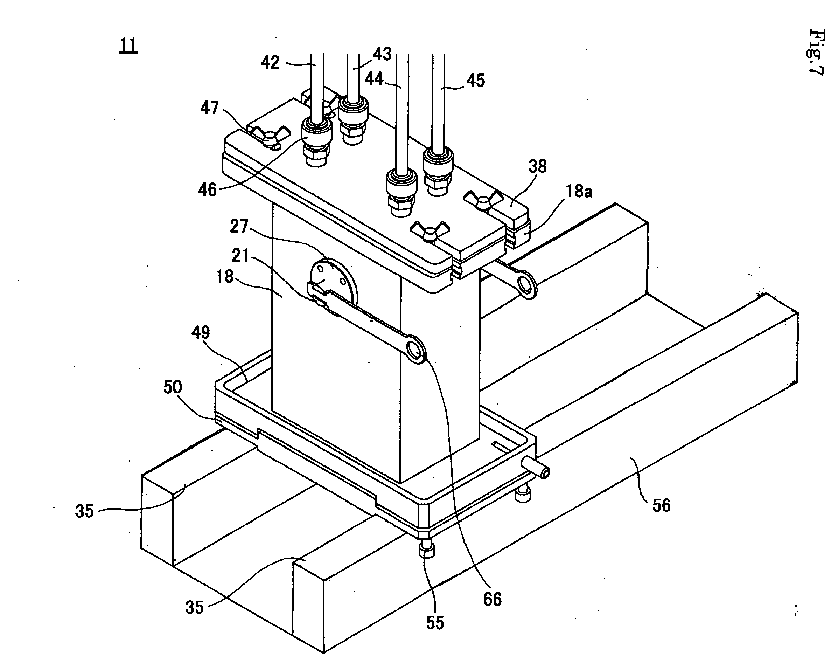

Near these holes 21-26 there are provided grooves 21a-26a in which to install a stopper 66 (see Fig. 7) that prevents liquid leakage from the holes 21-26 when the device is not in use. These holes 21-26 and grooves 21a-26a are formed in light-transmitting protrusions 27, 28, 29, 30, 31, 32 protruding from the walls of the containers 18, 19, 20 in the direction of travel of the continuous medium 14. Preferably, the protrusions 27-32 are removably mounted with an O-ring 33 installed between the protrusions and the containers 18, 19, 20 to prevent a possible liquid leak. The user can view the continuous medium 14 in the reagent liquids 15, 16, 17 through the light-transmitting protrusions 27-32 and thereby easily check a deviation of the continuous medium 14 from the travel path and its slack.

These containers 18, 19, 20 are mounted movable on rails 35 provided on a base 34. Denoted 36 is a blade which is a magnet covered with resin and installed in the containers 18, 19, 20. Denoted 37 is an agitator that rotates a magnet 37a installed outside the containers 18, 19, 20 by a motor to turn the blade 36 inside the containers 18, 19, 20 through a magnetic force.

Denoted 38, 39, 40 are covers that constitute the cover unit covering the openings except for the holes 21-26 in the containers 18, 19, 20 and, with an annular packing 41 held between the covers and the containers, are fastened by bolt 47 and nut 48 to flanges 18a, 19a, 20a provided around the periphery of the opening and fitted into the openings. These covers 38, 39, 40 are each provided with four pipes 42, 43, 44, 45 penetrating therethrough that are supported by pipe connectors 46.

Denoted 49 is a drain pan that collects liquid that leaked from the containers 18, 19, 20 and which correspond to the vessel. Below the containers 18, 19, 20 fine adjustment guides 50, 51, 52 to finely adjust the vertical position of the containers 18, 19, 20 are supported on the rails 35.

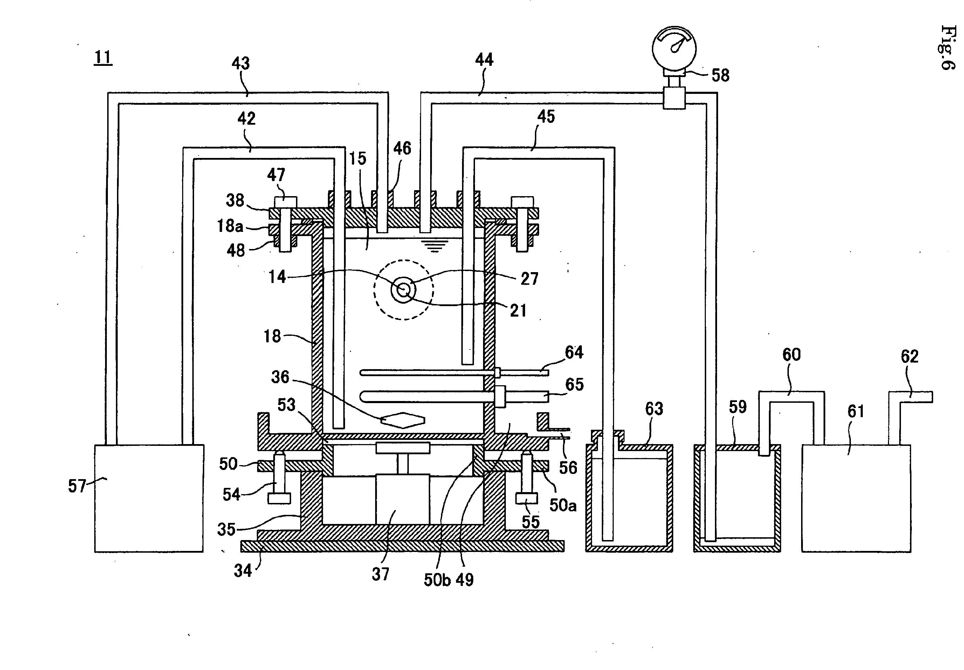

Fig. 6 is a cross-sectional view of the liquid processing unit 11 taken such that the continuous medium 14 travels in the forward and backward direction with respect to a plane of the figure. Components identical with the corresponding parts in Fig. 5 are denoted like reference numerals and their explanations are omitted.

The fine adjustment guide 50 has a peripheral portion 50a mounted on the rails 35 and an engagement portion 50b that can be fitted into a groove 53 provided at the bottom portion of the container 18. As a position fine adjustment means to make fine adjustments on the vertical position, the peripheral portion 50a has a plurality (in this case, four) of bolts 54, 55 screwed therethrough from below to support the bottom of the container 18 at their front end. The bolts 54, 55 are individually adjusted in their vertical position to change the engaging state between the groove 53 and the engagement portion 50b as well as the vertical position or inclination of the container 18 to finely adjust the position of the holes 21, 22.

The engagement portion 50b is formed hollow, in which is installed the agitator 37, with the magnet at the upper end of the agitator 37 facing the blade 36 in container 18. The engagement portion 50b has the outer surface of its upper portion fitted into the groove 53 formed at the bottom of the container 18 and also the outer surface of its lower portion fitted into a gap between the rails 35.

The drain pan 49 of the liquid processing unit 11 is provided with a drain pipe 56 through which liquid collected in the drain pan 49 can be discharged. One end of the pipe 42 passes through the cover 38 to reach the bottom of the interior of the container 18 and the other end is connected to the circulation pump 57. The pipe 42, the circulation pump 57 and the pipe 43 together constitute a circulation unit that circulates the liquid accommodated in the container 18 in the vertical direction. The circulation unit can also be used as a supply unit to supply liquid to the container 18 by removing one end of the pipe 43 from the container 18 and connecting it to a tank (not shown) accommodating the liquid. Further, by connecting the end of the pipe 43 to a discharge tank (not shown), the circulation unit can also be used as a discharge unit to discharge the liquid from the container 18.

The pipe 44 has one end thereof disposed in the upper part of the interior of the container 18, with the other end extending to the bottom of a trap container 59. In the middle of the pipe 44 is installed a pressure gauge 58 that measures a gas pressure in the container 18 and applies a negative pressure through the holes 21, 22 so as to prevent a liquid leakage. The trap container 59 is connected to a vacuum pump 61 through a pipe 60. The pipe 62 is intended to exhaust air. The pipe 44, pressure gauge 58, trap container 59, pipe 60, vacuum pump 61 and pipe 62 together constitute the pressure means.

The pipe 45 has one end thereof disposed in a middle portion of the interior of the container 18 and the other end connected to a supply tank 63 to adjust the liquid volume in the container 18 according to the pressure applied to the interior of the container 18 by the pressure means. Further, the container 18 is provided with a temperature sensor 64 to detect a temperature of the liquid in the container 18 and a heater 65 to heat the liquid.

Fig. 7 is a perspective view of the liquid processing unit 11.
As described above, the reference number 66 represents the stopper that closes the grooves 21a, 22a of the holes 21, 22 to prevent evaporation and leakage of the liquid when the unit is not in use.

Next, the operation of the continuous medium processing device according to the embodiment of this invention will be explained.
As described earlier, a 6-nylon thread is used as the continuous medium 14. A process of forming a porous layer on the surface of the continuous medium on which to attach biological substances, such as DNAs, proteins, antigens and antibodies, will be described in detail.

As described above, the container (not shown) corresponding to the liquid processing unit 4 shown in Fig. 1 accommodates, for example, hydrochloric acid with a density of 5N for hydrolyzing and dissolution and 99.5% ethanol; the container 18 of the liquid processing unit 11 accommodates 45% ethanol to render the surface of the continuous medium porous; the container 19 of the liquid processing unit 12 accommodates tris-HCL with a 0.5-mol density as a neutralizer; and the container 20 of the liquid processing unit 13 accommodates distilled water for solidifying and cleaning.

Next, the continuous medium 14 in the form of the 6-nylon thread to be processed is inserted through the hole (not shown) and the holes 21, 22, 23, 24, 25, 26 in the container (not shown) and the containers 18, 19, 20 of the liquid processing units 4, 11, 12, 13 and tensed by the tension control roller 3 in such a way that the thread can travel through the holes. The 6-nylon thread is wound on a supply reel of the bobbin 1, with the front end thereof fixed to a takeup reel of the bobbin 6. The bobbin 6 is driven by a motor not shown so that the 6-nylon thread travels at the constant speed.

If the heights of the hole (not shown) and the holes 21, 22, 23, 24, 25, 26 are not aligned, causing the 6-nylon thread to contact the hole (not shown) and the holes 21, 22, 23, 24, 25, 26 and its travel path to deviate from a straight line, the screw positions of the bolts 54, 55 provided in the liquid processing units 4, 11, 12, 13 are adjusted to make the travel path straight.

When the 6-nylon thread is set on the travel path running through the hole (not shown) and the holes 21-26, the vacuum pump 61 is activated to suck air from the container 18 through the pipes 44, 60 and the trap container 59 to apply a predetermined negative pressure to the interior of the container 18. The pressure in the container 18 is measured by the pressure gauge 58. These steps can prevent a liquid leakage from the holes 22, 23.

Further, in the liquid processing units 4, 11, 12, 13, to keep uniform spatial variations in the density of each liquid contained, the liquid in each container 18 is circulated vertically through the path outside the container 18, i.e., through the pipe 42 running outside the container 18, the circulation pump 57 installed outside and the pipe 43 running outside. This eliminates vertical variations in the density of the liquid contained in each container 18. Further, the blade 36 provided at the bottom inside each container 18 is rotated by driving the agitator 37 installed outside the container to stir the liquid and thereby eliminate horizontal variations in the density. The temperature of reagent in each liquid processing unit 4, 11, 12, 13 is maintained at an optimal level by detecting the temperature by the temperature sensor 64 and changing electric current through the heater 65 according to the detected temperature.

With these steps taken and with the liquid stirring and circulation and the temperature and negative pressure control in operation, the 6-nylon thread is fed at a constant speed that is predetermined by considering the process time in each liquid and the cleaning time.

A part of the 6-nylon thread extending from its front end to the hole (not shown) of the liquid processing unit 4 and a part of the 6-nylon thread extending from its rear end to the hole 26 of the liquid processing unit 13 are not processed completely and thus wasted.

As the 6-nylon thread passes through a predetermined width L1 of the liquid processing unit 4 at a travel speed v, or during the period of L1/v, the 6-nylon thread comes into contact with the reagent including hydrochloric acid and its surface becomes hydrolyzed and dissolves into a semi-liquefied (or softened) state. This corresponds to the reaction step. The 6-nylon thread, after coming out of the liquid processing unit 4, enters the liquid processing unit 11. While passing through a predetermined width L2 of the liquid processing unit 11, or during the period of L2/v, the 6-nylon thread contacts the ethanol solution, with the result that its semi-liquefied surface becomes porous. This corresponds to the porous surface forming step. After coming out of the liquid processing unit 11, the 6-nylon thread formed with fine pores in the surface enters the next liquid processing unit 12. As it passes through a predetermined width L3 of the liquid processing unit 12, or during the period of L3/v, the remaining acid is neutralized by tris-HCl. This corresponds to the neutralization step.

The 6-nylon thread then enters the liquid processing unit 13. As the thread passes through a predetermined width L4 of the liquid processing unit 13, the semi-flexible surface is solidified and washed with distilled water. This corresponds to the solidifying step. Next, the thread is dried by an infrared lamp as the drying unit 5. This corresponds to the drying step. The distance for the drying step is, for example, 300 mm and the drying time is 60 seconds.

Of the 6-nylon thread, the portions that are not completely processed are approximately (L1 + L2 + L3 + L4) long from the front end of the thread and also from the rear end. If the entire 6-nylon thread is set sufficiently long, the length of the above incompletely processed portions is considered negligible. The widths L1, L3, L3, L4 of the containers 18, 19, 20 of the liquid processing units 4, 11, 12, 13 as well as the drying distance and the travel speed are set according to the time required by the processing.

Next, the process of rendering the 6-nylon thread as the continuous medium 14 porous and attaching porous fine particles to the surface of the 6-nylon thread will be explained.

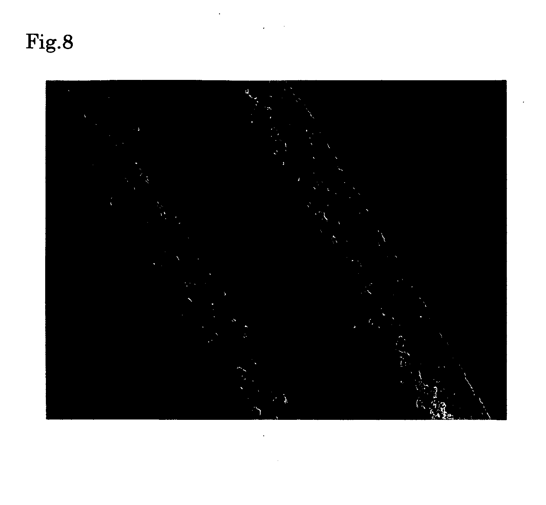

This processing can be executed using the same device 10 that is used in the step of making the 6-nylon thread porous. It is noted, however, that the reagent accommodated in the container of the liquid processing unit 4 is a liquid mixture of 5N hydrochloric acid and ethanol that contains a large number of suspended 6-nylon fine particles. The fine particles are sufficiently smaller in diameter than the 6-nylon thread diameter of 136µm. The use of this suspension liquid hydrolyzes and semi-liquefies not only the surface of the 6-nylon thread but the fine particles, so that in the reaction step a large number of fine particles can easily be attached to the surface of the continuous medium 14. The subsequent processing is similar to the above-described step of making the 6-nylon thread porous and, in addition to rendering the 6-nylon thread porous, can increase the surface area of the thread by attaching the fine particles. This in turn enhances the reactivity of the thread with biological substances and its bonding performance. The 6-nylon thread processed in this manner is shown in Fig. 8.

How the continuous medium of nylon fabricated in this manner is used is disclosed in patent document 4 cited above. In simple terms, the continuous medium has biological substances or detection substances of known chemical structures, such as oligonucleotides and proteins of predetermined base sequences, fixed thereon at predetermined intervals in the longitudinal direction at predetermined positions or in a predetermined order. As for the fixing of biological substances on the medium, liquids in many wells having various kinds of biological substances suspended therein are drawn into a transfer pipette, carried over the medium and then spotted at predetermined positions on the medium where the biological substances are bonded to the functional groups of the medium for fixing. The continuous medium having biological substances fixed thereon is wound around a cylindrical or columnar core and then accommodated in a pipette tip that is removably attached to a nozzle of a pressure adjust means of the transfer pipette with a suction/delivery function to draw liquids and deliver it. The liquids are accommodated in containers installed outside the transfer pipette and have fluorescence-labeled object biological substances, such as DNA fragments of unknown base sequences, suspended therein. Next, the front ends of the pipette tip are inserted into the containers to draw the liquids into the pipette by the pressure adjust means to bring the object biological substances suspended in the liquids into contact with the detection biological substances fixed on the continuous medium, allowing the object substances to bond to one of the detection biological substances by ligation. Next, the residual liquids are ejected into the containers. Then, the pipette tip is inserted into a separate container accommodating a cleansing liquid to suck and eject the cleansing liquid to remove the object biological substances not fixed. With the liquids to be measured drawn into the pipette, the continuous medium treated in this manner is irradiated with a fluorescence excitation light from outside the accommodating unit. A light receiving unit provided outside receives a fluorescence produced and, from the illuminated positions on the continuous medium, the known chemical structure is determined. Based on this chemical structure, the structure of the object biological substance is analyzed and determined.

The above embodiments are intended to facilitate the understanding of this invention and in no way limit the application of this invention to other embodiments. Therefore, modifications may be made within the scope of this invention. Further, the constitutional elements, components and devices -- e.g., continuous medium, liquid processing units, containers, gaps, holes, pipes, agitator blades, temperature sensors, drying units, heaters and reagentsmay be changed or modified and combined arbitrarily.

Although we have described the case of four containers in the liquid processing units, the number of containers may be reduced or increased depending on the number of reagent liquids required for processing or the processing time. For example, the number of containers a unit length wide may be adjusted to match the processing time.

Further, while the above description explains about only the processing of rendering the threadlike continuous medium in the form of a nylon thread porous, the continuous medium may be a string or a tape with some width. Further, the medium does not need to be a continuous medium and may be particles or plates that can be transferred into containers by a transfer pipette or other medium transport means for processing. The medium is not limited to nylon and may be applied to other polyamide-based polymers. The surface treatment can be applied not only to rendering the surface porous but also to other processing, such as fixing a predetermined substance to the continuous medium, for example, fixing functional groups to cellulose thread.

### INDUSTRIAL APPLICABILITY

The present invention can be applied to a variety of fields including agriculture and fisheries, food, household articles, pharmacy, medical treatments including hygiene and healthcare, engineering, chemistry, textile, machine industry, and electricity. Specifically, the invention is suited for application in those fields that require the handling of biological substances such as genes, immunological substances, amino acids, proteins and sugar chains. More specifically, the invention is suited for analysis of genetic anomalies, polymorphism, mapping, base sequence analysis and expression analysis. But the application is not limited to these.

### DESCRIPTION OF REFERENCE NUMERALS

- 1, 6:: Bobbin
- 2:: Roller
- 3:: Tension control roller
- 4, 11, 12, 13:: Liquid processing unit
- 10:: Continuous medium processing device
- 14:: Continuous medium (6-nylon thread)
- 15, 16, 17:: Reagent liquid
- 18, 19, 20:: Container
- 21, 22, 23, 24, 25, 26:: Hole
- 36:: Blade
- 37:: Agitator
- 42, 43, 44, 45, 62:: Pipe
- 50, 51, 52:: Fine adjustment guide
- 61:: Vacuum pump
- 64:: Temperature sensor
- 65:: Heater

## Claims

1. A fixing medium made of polyamide-based polymer comprising:
a functional group capable of bonding to biological substances; and
a porous area.

2. A fixing medium according to claim 1, further comprising a plurality of medium particles adhering to the fixing medium.

3. A fixing medium according to claim 1 or 2, wherein one or more kinds of biological substances are fixed to the medium.

4. A medium processing method comprising:
a reaction step of dissolving a medium made of polyamide-based polymer to a semi-liquid state and hydrolyzing peptide bonds;
a step of rendering the medium porous; and
a step of solidifying the porous medium.

5. A medium processing method according to claim 4, wherein the medium, after being dissolved to the semi-liquid state, is hydrolyzed.

6. A medium processing method according to claim 4 or 5, wherein the reaction step has a step of suspending a large number of medium particles in a solution.

7. A medium processing method according to any of claims 4 to 6, wherein when the polyamide-based polymer is a nylon, the reaction step is executed by bringing a water solution of hydrochloric acid and/or formic acid into contact with the medium.

8. A continuous medium processing device comprising:
a feeding mechanism to run a continuous medium longitudinally along a predetermined travel path;
one or more containers installed along the travel path and containing liquids which are to be brought into contact with the continuous medium successively;
gaps provided in wall portions of each of the containers on the travel path so that the continuous medium can run through the containers; and
a liquid leakage prevention unit provided to the containers to prevent possible leakage of the liquids from the gaps.

9. A continuous medium processing device according to claim 8, wherein the liquid leakage prevention unit has a cover portion covering openings in the containers except for the gaps.

10. A continuous medium processing device according to claim 8 or 9, wherein the liquid leakage prevention unit has a pressure means for applying a negative pressure to the interior of each container.

11. A continuous medium processing device according to any of claims 8 to 10, wherein the liquid leakage prevention unit has:
a vessel provided outside each of the containers to receive the liquid that has leaked from the container; and
a pump mechanism provided outside the container to return the liquid collected in the vessel to the container.

12. A continuous medium processing device according to any of claims 8 to 10, wherein internal lengths of the containers installed along the travel path, or lengths of the gaps provided in the containers, the number of the gaps and/or a travel speed are determined according to the content of processing.

13. A continuous medium processing device according to any of claims 8 to 12, wherein a liquid maintenance unit to keep a quality and/or quantity of the liquid accommodated in each of the containers is provided to each container.

14. A continuous medium processing device according to any of claims 8 to 13, wherein a liquid modification unit to change a quality and/or quantity of the liquid accommodated in each of the containers is provided to each container.

15. A continuous medium processing device according to any of claims 8 to 14, wherein the gaps provided in the wall portions of the containers have a position fine adjustment means on the travel path to finely adjust a vertical position or a horizontal position of the containers so that the continuous medium can travel through the gaps.

16. A continuous medium processing device according to any of claims 8 to 15, wherein the containers have:
a pressure sensor to measure a pressure in each of the containers and/or a temperature sensor to measure a temperature in each container; and
a control unit to, based on the measurements of the pressure sensor and/or temperature sensor, control the liquid maintenance unit, the liquid modification unit, the pressure means, a heater unit, a cooling unit or the feeding mechanism.

17. A continuous medium processing device according to any of claims 8 to 16, wherein a drying unit to dry the continuous medium is installed on the travel path.

18. A continuous medium processing device according to any of claims 8 to 17, wherein an activation unit is provided on the travel path to activate a surface of the continuous medium by radiating an electromagnetic wave including an ultraviolet light to the continuous medium.

19. A continuous medium processing method comprising:
a liquid supply step of supplying liquids, that are to be brought into contact with a continuous medium, to one or more containers provided along a travel path, along which the continuous medium can be run longitudinally;
a liquid leakage prevention step of preventing a liquid leakage from gaps in wall portions of each of the containers installed along the travel path; and
a feeding step of causing the continuous medium to run through the gaps in the containers along the travel path.

20. A continuous medium processing method according to claim 19, wherein the liquid leakage prevention step prevents a liquid leakage by covering openings in the containers except for the gaps.

21. A continuous medium processing method according to claim 19 to 20, wherein the liquid leakage prevention step prevents a liquid leakage by setting the interior of each of the containers to a negative pressure.

22. A continuous medium processing method according to any of claims 19 to 21, wherein the liquid leakage prevention step prevents a liquid leakage by returning to the containers the liquid collected in a vessel provided outside and accommodating each of the containers.
